# EUROPEAN PATENT APPLICATION

(11) **EP 2 090 375 A1**
(43) Date of publication of application: **19.08.2009**
(21) Application number: 09153079.0
(22) Date of filing: 18.02.2009
(51) Int. Cl.: B05B 15/12, F24F 1/00

(54) **System for thermally controlling a booth**

(30) Priority: 18.02.2008 IT TO20080121
(71) Applicant: Technoplants S.r.l., 10098 Rivoli (TO) (IT)
(72) Inventor: Di Battista, Antonio, 10137 Torino (IT); Pedruzzi, Patric, 10098 Rivoli (Torino) (IT)
(74) Representative: Robba, Pierpaolo

(57) **Abstract**

The present invention concerns a system for controlling at least thermally a booth. The energy recovery system (10) comprises: a first air treatment unit (20) arranged to take outside air and to introduce air that has been at least thermally controlled into the booth (12); a second air treatment unit (30) arranged to extract exhausted air from the booth (12); and heat exchanging means (43) configured to exchange heat between the exhausted air and the outside air to be introduced into the booth. The system further includes air humidifying means (45) arranged to humidify the exhausted air, to lower the predetermined temperature of the exhausted air by exploiting the evaporation enthalpy, and to introduce the humidified exhausted air into the heat exchanging means so as to optimise the energy recovery. The invention also concerns a unit for treating exhausted air and a method of controlling at least thermally a booth.

## Description

### Technical field

The present invention generally relates to an energy recovery system for thermally controlling a booth.

More particularly, the present invention relates to systems for thermally and hygrometrically controlling booths such as for instance painting booths, surfacing booths, clean rooms and so on.

### Prior art

Energy recovery systems for thermally or thermally and hygrometrically controlling different kinds of booths, for instance painting booths, are well known.

Such systems generally comprise a first air treatment unit (first ATU) arranged to introduce outside air into the booth and a second air treatment unit (second ATU) arranged to extract exhausted air from the booth.

For instance, it is known that, in systems for thermally and hygrometrically controlling booths, which systems are referred to herein for sake of easiness of description, the first ATU includes:
- a ventilation section for air introduction into the booth, which section is arranged to introduce outside air into the booth;
- a heating section arranged to heat air, if necessary;
- a cooling section arranged to cool air; such a section can also be used for obtaining water condensation and collection, and hence for dehumidifying air;
- a humidifying section, arranged to humidify air up to a predetermined humidity level;
- a post-heating section, arranged to cooperate with the humidifying section in order to allow introducing air at a predetermined temperature and with a predetermined humidity level into the booth;
   and the second ATU for instance includes:

- a ventilation section for air extraction from the booth, arranged to extract exhausted air from the booth;
- a cross-flow or rotary heat exchanging section, arranged to exchange heat between the exhausted air and the outside air to be introduced into the booth, so as to obtain an energy recovery from such heat exchange.

The Applicant has realised that energy recovery by a simple crossing of the air flow to be introduced into the booth and the air flow extracted from the booth is extremely low and that it would therefore be desirable to improve energy recovery booth installations so as to obtain a considerably higher recovery.

By summarising, the Applicant has realised that a solution to the technical problem of optimising energy recovery in booth installations is urgently needed.

### Description of the invention

The present invention aims at solving the above problem of energy recovery booth installations.

That technical problem is solved by a system for thermally controlling a booth as claimed herein.

The present invention also concerns a method of energy recovery in a system for thermally controlling a booth.

The claims are integral part of the technical teaching provided herein in respect of the invention.

According to a preferred embodiment, the system for controlling at least thermally a booth comprises, upstream a heat exchanging section arranged to exchange heat between the exhausted air extracted from the booth and the outside air to be introduced into the booth, a humidifying unit arranged to lower the temperature of exhausted air and to thereby optimise energy recovery attainable in the system through the heat exchanging section.

According to another feature of the present invention, the method of controlling at least thermally a booth provides for associating the step of extracting exhausted air from the booth with a step of exhausted air humidification, so as to lower the temperature of exhausted air and to optimise energy recovery of the system by exploiting the evaporation enthalpy.

### Short description of the Figures

The above and other features of the present invention will become apparent from the following description of a preferred embodiment, made by way of non limiting example with reference to the accompanying drawings, in which elements denoted by a same or similar numerical reference denote components having the same or similar function and construction, and in which:

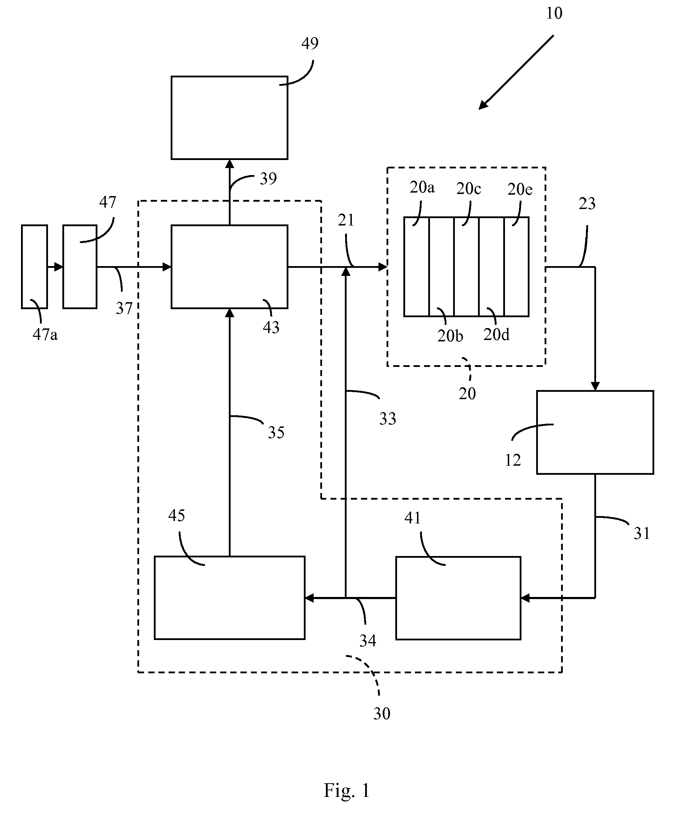

- Fig. 1 is a block diagram of the system according to the invention.

### Description of a preferred embodiment

Referring to Fig. 1, a system 10 according to the present invention for controlling at least thermally a booth 12 comprises a first air treatment unit (first ATU) 20, located upstream the booth, and a second air treatment unit (second ATU) 30, located downstream the booth.

The first ATU 20, of known type, is arranged to take air from the outside and to introduce air at controlled temperature and, according to the present example, at controlled humidity (treated air) into booth 12. Said unit comprises, for instance, a ventilation section 20a for air introduction into the booth, a heating section 20b, a cooling section 20c, a humidifying section 20d and a post-heating section 20d, all such sections being of known type and being connected to one another in known manner.

In accordance with the preferred embodiment, the first ATU 20 has an air inlet conduit 21, connected to an air outlet from the second ATU 30 and arranged to enable taking outside air, and at least one air delivery conduit 23 connected to booth 12 and arranged to introduce treated air into booth 12.

The second ATU 30 is arranged to extract air from booth 12 and to treat such air so as to recover in optimised manner energy utilisable for air treatment by means of the first ATU 20, as it will be disclosed in more detail below.

It is here pointed out that, in describing system 10 according to the present invention, the sections configured to obtain cooling of the outside air to be introduced into the booth are especially considered, since the invention has been developed in order to optimise energy recovery in such conditions, i.e. when the temperature of air taken from the outside is higher than the temperature of air in the booth, so that the temperature of air to be introduced into the booth is to be significantly reduced to predetermined levels.

In accordance with the preferred embodiment, the second ATU 30 includes:
- a section or means 41 of known type for treating extracted air, which section is arranged to suck air from booth 12 through an air extraction conduit 31 and to filter such air; if air recirculation is provided for, such a section may comprise, at its outlet, an air recirculation conduit 33, known per se, connected to conduit 21;
- a heat exchanging section or heat exchanging means 43, for instance a section with cross flow or rotary flow, of known type, such as section model RF14/3730/S/AL of company NOVAIR-CLINT; heat exchanging section 43 is connected to the first ATU 20 through conduit 21 and includes an inlet conduit 37 for outside air, connected to an outside air intake 47a, preferably through an interposed filtering section 47, and an outlet conduit 39 arranged to discharge exhausted air to the outside, preferably through an interposed emission treating system or section 49, of known type, arranged to filter away/abate polluting substances present in exhausted air.

In accordance with one of the features of the present invention, the second ATU 30 further includes a humidifying section or humidifying means 45, having an inlet conduit 34 for exhausted air, connected to extracted air treating section 41, and an outlet conduit 34 for exhausted and humidified air, connected to heat exchanging section 43.

Humidifying section 45, for instance a section model SEZIONE ADIABATICA 200 mm of company NOVAIR-CLINT, is arranged to humidify exhausted air leaving the booth simply thanks to water evaporation and by exploiting the evaporation enthalpy and, as it will become apparent below, it is arranged to considerably lower the temperature of exhausted air extracted from booth 12 before introducing such air into heat exchanging section 43.

It should be pointed out here that, throughout the present description, as it will be readily appreciated by a skilled in the art, the term "conduit" is used in broad sense to denote one or more conduits or pipes arranged to convey fluids, such as air.

Moreover, it should also be pointed out that, throughout the present description, two air treatment units (ATU's) have been defined for sake of simplicity of description, but, as it will be readily appreciated by a skilled in the art, the sections described above can be independent sections connected together so as to build the system, and they do not need to be included into respective air treatment units.

The operation of system 10 described above is as follows.

Outside air is pre-filtered in filtering section 47 and then it passes through heat exchanging section 43, where outside air crosses exhausted air extracted from the booth.

After having passed through heat exchanging section 43, air is sucked by the first ATU 20, where thermal-hygrometrical air control takes place.

Air is introduced into booth 12 in order to maintain predetermined thermal-hygrometrical conditions in the booth.

Extracted air treating section 41 extracts "exhausted" air from booth 12 in order to pass such extracted air to humidifying section 45 and/or to partially recirculate it to the first ATU 20 through conduit 33

Recirculation depends on possible air pollution occurring during the working processes performed inside booth 12 and, according to variant embodiments of the present invention, recirculation can be lacking.

Air that has not been recirculated is treated by humidifying section 45, it is cooled to a lower temperature and brought to a higher specific heat (Cp) due to water evaporation, then it is sent to heat exchanging section 43 in order to be discharged into the environment or to be sent to exhausted air treating system 49 via conduit 39.

Hereinafter the results in terms of energy recovery are reported. Such results have been obtained by means of experimental tests performed by using the system according to the invention and they show that the provision of humidifying section 45 allows maximising energy recovery by system 10.

Reference is made to a booth with the following conditions, for 16 working hours per day:
- a flow rate of 85,000 m³/h (internal temperature in the booth 25°C);
- a temperature of 25°C inside the booth;
- a relative humidity (RH) inside the booth of 50 ± 5 %.

Summer conditions, with air temperature 35°C and RH 50% are assumed.

### SYSTEM WITHOUT HUMIDIFYING SECTION

The following conditions exist in cross-flow heat exchanging section:
- flow rate of air extracted from the booth: 77,872 Nm³/h, corresponding to 85,000 m³/h at 25°C;
- temperature: 25°C;
- relative humidity: 50 ± 5 %;
- flow rate of air introduced into the booth: 77,872 Nm³/h, corresponding to 87,850 m³/h at 35°C;
- temperature: 25°C;
- relative humidity: 50 ± 5 % h.

Assuming an average efficiency of 60% for the heat exchanger, the energy recovery is about 147,393 Kcal/h with a temperature difference of about 6°C. That is, air to be introduced is cooled by 6°C, i.e. air to be introduced is cooled from 35°C to 29°C.

### SYSTEM WITH HUMIDIFYING SECTION

In case the humidifying section is provided, exhausted air extracted is humidified before passing through the cross-flow heat exchanger.

Under the conditions having been assumed, the humidifying section can cool air from 25°C, RH = 50%, to about 21°C, RH = 70%.

In this case, the following operating conditions exist in the cross-flow heat exchanger:
- flow rate of air extracted from the booth: 77,872 Nm³/h, corresponding to 85,000 m³/h at 25°C;
- temperature: 21°C;
- relative humidity: about 70 %;
- flow rate of air introduced into the booth: 77,872 Nm³/h, corresponding to 87,850 m³/h at 35°C;
- temperature: 25°C;
- relative humidity: 50 ± 5 %.

Assuming an average efficiency of 60% for the heat exchanger, the energy recovery is about 206,350 Kcal/h with a temperature difference of about 8.4°C. Air to be introduced is cooled by 8.4°C, i.e. it would be cooled from 35°C to 26.6°C.

The increase in energy recovery is considerable and amounts to about 40% in such operating conditions.

Consequently, while the energy recovery, with the only cross-flow, is in the above example:
- hourly recovery = 171.3 KW
- daily recovery = 2,740.8 KW,
   in the case of use of the system and the humidifying section according to the invention a recovery of about 913.6 electrical kilowatts (el. KW) is achieved, corresponding to the following energy recovery with cross-flow and humidification:

- hourly recovery = 239.8 KW
- daily recovery = 3,836.8 KW
- yearly electrical Kilowatt recovery = 1,278.9 el. KW.

The example therefore clearly shows that the provision of a humidifying section in the exhaust air treatment considerably increases the yield of the thermal recovery, the other conditions being the same.

The system as described can be applied for thermally or thermally and hygrometrically controlling painting booths, surfacing booths, clean rooms and booths in general, and it is aimed at improving energy recovery by humidifying extracted air before treating same with a heat exchanger, for instance a cross-flow or rotary exchanger.

Obvious changes and modifications can be made to the above description in respect of sizes, shapes, materials, components and connections, as well as in respect of the details of the illustrated construction and the operating manner, without departing from the scope of the invention as set forth in the appended claims.

## Claims

1. A system for controlling at least thermally a booth, the system comprising:
- a first air treatment unit (20) arranged to take outside air, to treat the outside air and to introduce outside air that has been at least thermally controlled into the booth (12);
- a second air treatment unit (30) arranged to extract exhausted air at a given temperature from the booth;
- heat exchanging means (43) configured to exchange heat between the exhausted air and the outside air as taken;
the system being **characterised in that** said second air treatment unit (30) includes air humidifying means (45), arranged to humidify said exhausted air, to lower the temperature of said exhausted air by exploiting the evaporation enthalpy, and to introduce the humidified exhausted air into said heat exchanging means.

2. The system as claimed in claim 1, **characterised in that** said heat exchanging means (43) are included in said second air treatment unit (30).

3. The system as claimed in claim 1 or 2, **characterised in that** said second air treatment unit (30) further includes means (41) for treating the extracted air, which means are arranged to suck the exhausted air, to filter it and to introduce it into said air humidifying means.

4. The system as claimed in any of claims 1 to 3, **characterised in that** said first air treatment unit (20) includes at least one cooling section (20c) arranged to cool air coming from said heat exchanging means.

5. The system as claimed in claim 4, **characterised in that** said first air treatment unit (20) includes at least one section belonging to the group including:
- a ventilation section (20a);
- an air heating section (20b);
- a humidifying section (20d);
- a post-heating section (20e)

6. The system as claimed in any of claims 1 to 5, **characterised in that** it includes an outside air filtering section (47) arranged to filter the outside air to be introduced into the booth (12) by the first air treatment unit (20), and/or an exhausted air filtering section (49) arranged to filter the humidified exhausted air used by said heat exchanging means (43) and to discharge the humidified exhausted air outside the booth.

7. An exhausted air treating unit for a system for controlling at least thermally a booth, the unit comprising:
- air treating means (41) connectable to the booth and arranged to suck exhausted air at a given temperature;
- heat exchanging means (45) configured to exchange heat between the exhausted air and the outside air;
and being **characterised by** air humidifying means (45) arranged to humidify said exhausted air, to lower the temperature of said exhausted air by exploiting the evaporation enthalpy, and to introduce the humidified exhausted air into said heat exchanging means (43).

8. The exhausted air treating unit as claimed in claim 7, **characterised in that** said heat exchanging means (43) are cross-flow or rotary heat exchanging means.

9. A method of controlling at least thermally a booth, comprising the steps of:
- taking outside air;
- treating at least thermally said outside air and introducing, as a result of the treatment, air that has been at least thermally controlled into the booth (12);
- extracting exhausted air at a given temperature from the booth;
- performing a heat exchange between the exhausted air and the outside air; the method being **characterised in that** the step of extracting exhausted air comprises humidifying the exhausted air so as to lower the given temperature of said exhausted air by exploiting the evaporation enthalpy.

10. The method as claimed in claim 9, **characterised in that** said step of extracting exhausted air further comprises filtering said exhausted air.

11. The method as claimed in claim 9 or 10, **characterised in that** said step of treating at least thermally said outside air comprises cooling the air before introducing it into said booth.

12. The method as claimed in any of claims 9 to 11, **characterised in that** it includes at least one of the steps of:
- filtering the outside air to be introduced into the booth; and/or
- filtering the humidified exhausted air and discharging it outside the booth.
